# EUROPEAN PATENT APPLICATION

(11) **EP 2 944 876 A1**
(43) Date of publication of application: **18.11.2015**
(21) Application number: 15382177.2
(22) Date of filing: 13.04.2015
(51) Int. Cl.: F23N 1/00, F16K 5/02

(54) **REGULATING VALVE FOR A GAS COOKING APPLIANCE**

(30) Priority: 14.05.2014 ES 201430704
(71) Applicant: Coprecitec, S.L., 20550 Aretxabaleta (ES)
(72) Inventor: Albizuri Landazabal, Iñigo, 48392 Múxika (ES); Oliva Aguayo, Jose Luis, 45560 Jalisco (MX)
(74) Representative: Igartua, Ismael

(57) **Abstract**

Regulating valve for a gas cooking appliance suitable for supplying different types of combustible gas, particularly natural gas (NG) or liquefied gas (LPG), comprising a valve body (10) with an inlet conduit (11) and an outlet conduit (12) and a rotary regulating member (20) housed in said valve body (10), said regulating member (20) comprising a plurality of inlet paths communicated with the inlet conduit (11) which, by means of the rotation of said regulating member (20), allows varying gas flow in the outlet conduit (12), wherein the inlet path of the regulating member (20) corresponding to a minimum flow "Q_{Min}" is in one and the same angular and axial position for natural gas (NG) and for liquefied gas (LPG).

## Description

### TECHNICAL FIELD

The present invention relates to gas valves incorporating a rotary regulating member, mounted in a gas cooking appliance, and to means for adjusting flow rate according to the family of combustible gas used.

### PRIOR ART

Gas valves for home cooking appliances using a single valve for regulating the flow of two different families of gas such as natural gas NG and/or liquefied petroleum gas LPG are known.

US 2006/0175566 A1 describes a gas valve for a home cooking appliance which can be supplied by different types of combustible gas, i.e., natural gas NG or liquefied gas LPG. Said valve comprises a valve body comprising an inlet conduit and an outlet conduit, and a rotary regulating member housed in said valve body. The regulating member comprises a first opening corresponding to a maximum flow Q_{Max}, a second opening corresponding to an intermediate flow Q_{Int}, and two successive openings corresponding to a minimum flow Q_{Min} spaced apart from one another in the rotational direction, one for natural gas NG and the other for liquefied gas LPG. In the minimum flow position, the regulating member is positioned with the inlet opening of minimum flow Q_{Min} corresponding to the type of gas to be used, i.e., natural gas NG or liquefied gas LPG, aligned with the inlet conduit. Depending on whether or not a stop element is included, one or the other inlet opening of minimum flow Q_{Min} in the regulating member is aligned with the inlet conduit in the position of minimum flow.

US 2013/0260327A1 discloses a gas valve for a home cooking appliance which can be supplied by different types of combustible gas, i.e., natural gas NG or liquefied gas LPG. Said valve comprises a valve body comprising an inlet conduit and an outlet conduit, and a rotary regulating member housed in said valve body. The regulating member comprises a first opening corresponding to a maximum flow Q_{Max}, a second opening corresponding to an intermediate flow Q_{Int}, and a third opening corresponding to a minimum flow Q_{Min}. The inlet openings of the regulating member corresponding to natural gas NG are located in a first axial position, and the inlet openings corresponding to liquefied gas are located in a second axial position, the gas valve comprising a regulating element which allows axially aligning the inlet openings of the regulating member of natural gas NG, or of liquefied gas LPG, with the inlet conduit.

### DISCLOSURE OF THE INVENTION

The object of the invention is to provide a regulating valve for a gas cooking appliance as defined in the claims.

The regulating valve for a gas cooking appliance suitable for supplying different types of combustible gas, particularly natural gas NG or liquefied gas LPG, comprises a valve body with an inlet conduit and an outlet conduit, and a rotary regulating member housed in said valve body, said regulating member comprising a plurality of inlet paths communicated with the inlet conduit which allows varying gas flow Q in the outlet conduit by means of the rotation of said regulating member.

Among the inlet paths of the regulating member which are communicated with the inlet conduit of the valve body, the inlet path of the regulating member corresponding to a minimum flow "Q_{Min}" is in one and the same angular and axial position for natural gas NG and for liquefied gas LPG.

In the valve of the invention, since the inlet path of the regulating member corresponding to a minimum flow Q_{Min} is arranged in one and the same angular position, it is not necessary to add, replace or remove any stop element in order for the regulating member to be correctly aligned in an angular manner with the inlet conduit, regardless of the type of gas used. Since the inlet path of the regulating member corresponding to a minimum flow Q_{Min} is arranged in one and the same axial position, no regulating element is necessary in order for the regulating member to be correctly aligned in an axial manner with the inlet conduit, according to the type of gas used.

These and other advantages and features of the invention will become evident in view of the drawings and the detailed description of the invention.

### DESCRIPTION OF THE DRAWINGS

Figure 1 shows a perspective view of an embodiment of a regulating valve for a gas cooking appliance according to the invention.
Figure 2 shows a plan view of the regulating valve of Figure 1, indicating the different angular positions of the rotating shaft of said regulating valve.
Figure 3a shows a longitudinal section view of the regulating valve of Figure 1, the regulating member being regulated in an angular position corresponding to a maximum flow.
Figure 3b shows a longitudinal section view of the regulating valve of Figure 1, the regulating member being regulated in an angular position corresponding to a minimum flow.
Figure 4a shows a cross-section view of the regulating valve of Figure 3a according to line IVa-IVa.
Figure 4b shows a cross-section view of the regulating valve of Figure 3b according to line IVb-IVb.
Figure 4c shows a cross-section view of the regulating valve of Figure 3b according to line IVc-IVc.
Figure 5a shows an elevational view of the regulating member of the regulating valve of Figure 1, showing a first opening corresponding to maximum flow, and a second groove-shaped opening corresponding to an intermediate flow.
Figure 5b shows an elevational view of the regulating member of Figure 5a that has been rotated, showing a slot corresponding to minimum flow.
Figure 5c shows a section view of the regulating member of Figure 5a according to line Vc-Vc.
Figure 6a shows a longitudinal section view of a second embodiment of the injector of the regulating valve of the invention with a first calibrated opening corresponding to minimum flow arranged at the base of said injector.
Figure 6b shows an elevational view of the injector of Figure 6a.
Figure 6c shows a perspective view of the injector of Figure 6a.
Figure 7a shows a longitudinal section view of a second embodiment of the regulating valve, the regulating member being regulated in the angular position corresponding to maximum flow.
Figure 7b shows a longitudinal section view of the regulating valve of Figure 7a, the regulating member being regulated in the angular position corresponding to minimum flow.
Figure 8a shows an elevational view of the regulating member of the regulating valve of Figure 7a, showing the first opening corresponding to maximum flow and the second groove-shaped opening corresponding to intermediate flow.
Figure 8b shows an elevational view of the regulating member of Figure 8a, showing the slot corresponding to minimum flow.
Figure 8c shows a section view of the regulating member of Figure 8a according to line VIIIc-VIIIc.
Figure 9a shows a longitudinal section view of a third embodiment of the regulating valve, the regulating member being regulated in the angular position corresponding to maximum flow.
Figure 9b shows a longitudinal section view of the regulating valve of Figure 9a, the regulating member being regulated in the angular position corresponding to minimum flow.
Figure 10a shows an elevational view of the regulating member of the regulating valve of Figure 9a, showing the first opening corresponding to maximum flow and the second groove-shaped opening corresponding to intermediate flow.
Figure 10b shows an elevational view of the regulating member of Figure 10a, showing the slot corresponding to minimum flow.
Figure 10c shows a section view of the regulating member of Figure 10a according to line Xc-Xc.

### DETAILED DISCLOSURE OF THE INVENTION

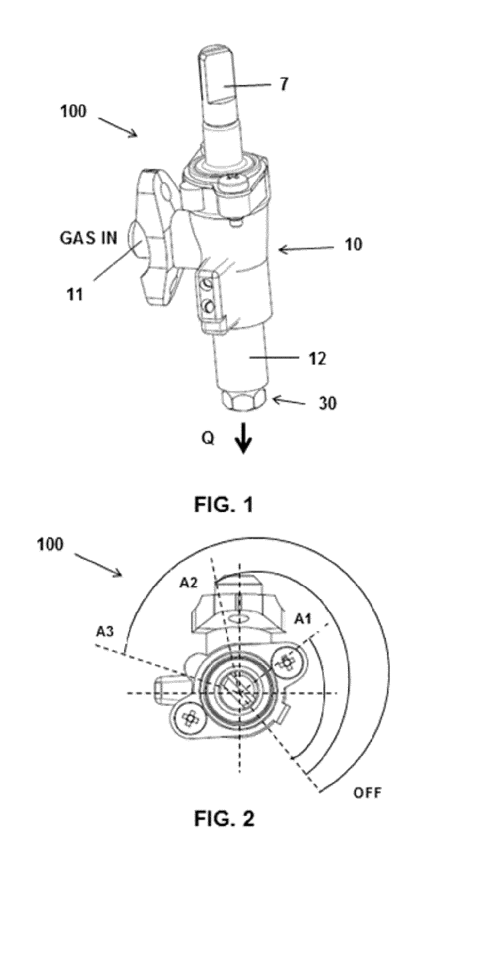

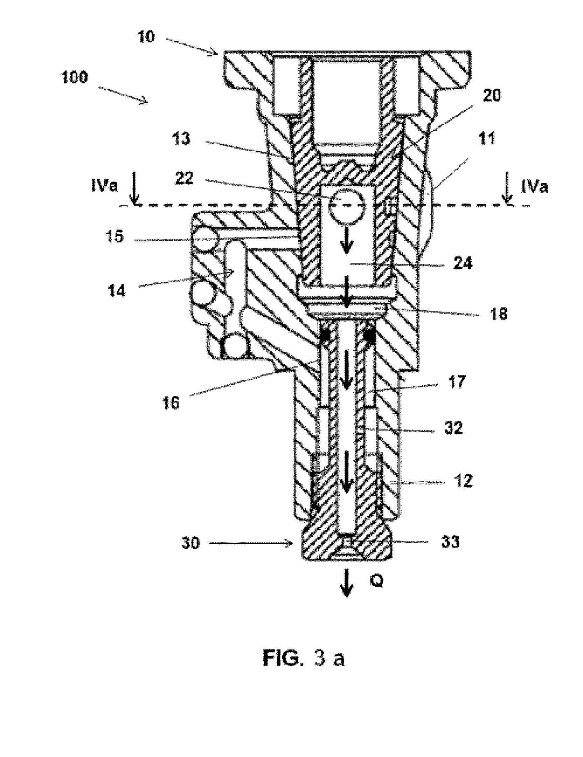

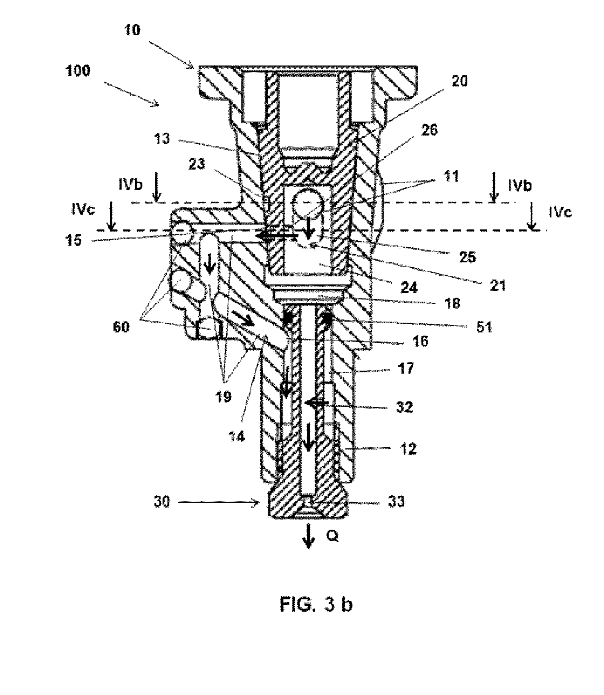

Figure 1 shows a perspective view of an embodiment of a regulating valve 100 for a gas cooking appliance according to the invention, suitable for supplying different types of combustible gas, particularly natural gas NG or liquefied gas LPG, and Figure 2 shows a plan view of the regulating valve of Figure 1, indicating the different angular positions of a rotating shaft 7 of said valve 100. The regulating valve 100 comprises a valve body 10 in turn comprising an inlet conduit 11 for the entry of gas from outside, and a substantially cylindrical outlet conduit 12 for the exit of gas after one type of either natural gas NG or liquefied gas LPG has been regulated at a specific flow. The regulating valve 100 also comprises an injector 30 arranged in the outlet conduit 12 of the valve body 10. Figures 3a and 3b show a longitudinal section view of the regulating valve 100, with the regulating member 20 and the injector 30 mounted in the valve body 10, Figure 3a showing the regulating member 20 regulated in an angular position corresponding to a maximum flow Q_{Max}, and Figure 3b showing the regulating member 20 regulated in an angular position corresponding to a minimum flow Q_{Min}. The injector 30 is interchangeable, and is different for natural gas NG and for liquefied gas LPG.

The valve body 10 comprises a housing cavity 13 suitable for receiving the rotary regulating member 20 having a substantially frustoconical shape. The regulating member 20 comprises a plurality of inlet paths which are communicated with the inlet conduit 11 of the valve body 10. The rotating shaft 7 is attached to the regulating member 20 (not shown in the drawings), and allows varying gas flow Q in the outlet conduit 12 of the valve body 10, by means of the rotation of said rotating shaft 7, and therefore the rotation of said regulating member 20.

The inlet paths of the regulating member 20, which are arranged on its side surface, comprise a first opening 22 corresponding to the angular position of maximum flow Q_{Max}, a second opening 23 corresponding to the angular position of intermediate flow, and a slot 21 arranged on the outer side surface of the regulating member 20, corresponding to the angular position of minimum flow Q_{Min}. The first opening 22, the second opening 23, and the slot 21 correspond with different angular positions A1, A1-A2, A3 of the regulating member 20, respectively, from an initial position OFF in which no gas enters the gas regulating valve 100 from the inlet conduit 11. The angular position of said first opening 22, second opening 23, and the slot 21 is the same for natural gas NG and for liquefied gas LPG.

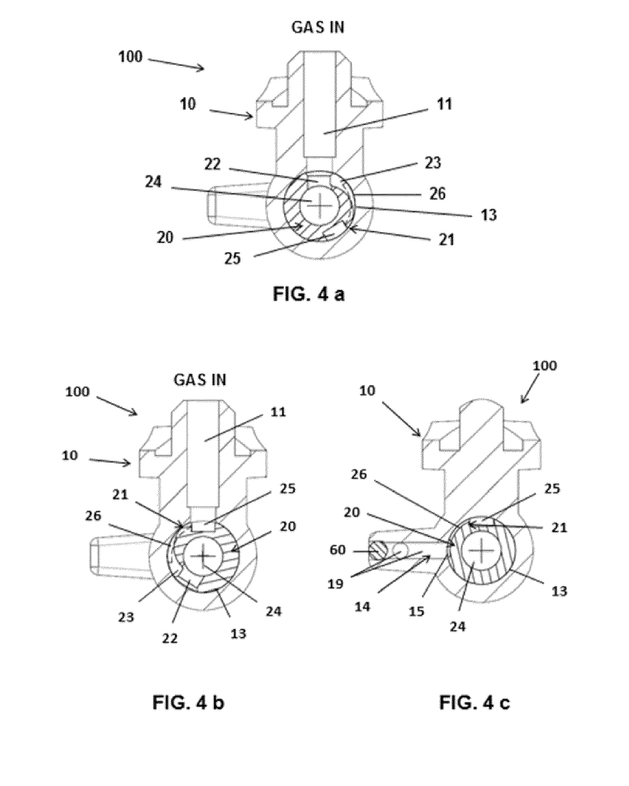

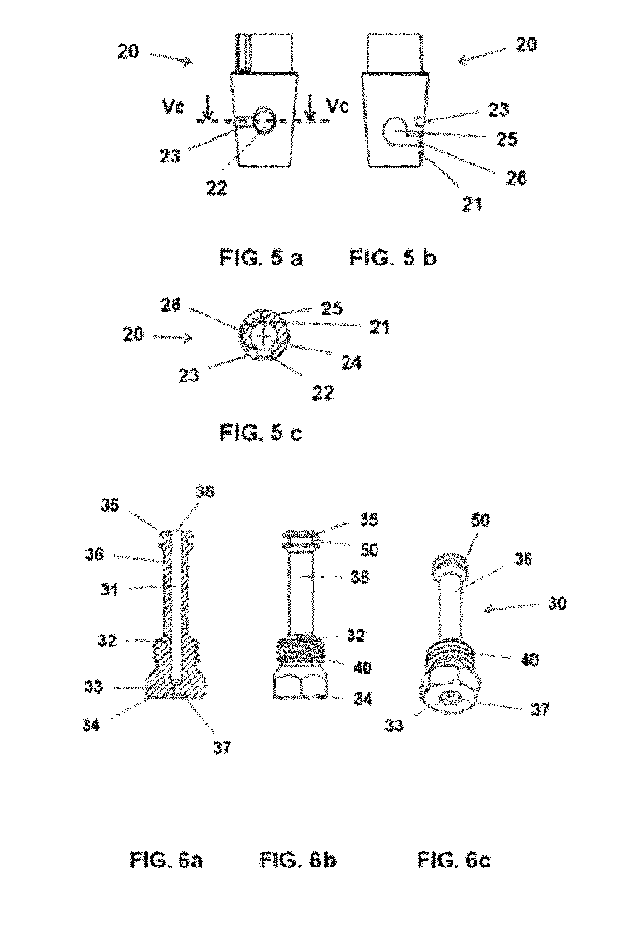

Figure 4a shows a cross-section view of the regulating valve of Figure 3a according to line IVa-IVa, Figure 4b shows a cross-section view of the regulating valve of Figure 3b according to line IVb-IVb, and Figure 4c shows a cross-section view of the regulating valve of Figure 3b according to line IVc-IVc. Figure 5a shows an elevational view of the regulating member 20 of the regulating valve 100 of Figure 1, showing the first opening 22 corresponding to maximum flow Q_{Max}, and the second groove-shaped opening 23 corresponding to intermediate flow Q_{Int}. Figure 5b shows an elevational view of the regulating member 20 of Figure 5a that has been rotated, showing the slot 21 corresponding to minimum flow Q_{Min}, and Figure 5c shows a section view of the regulating member 20 of Figure 5a according to line Vc-Vc. As can be seen in the drawings the slot 21, which is the inlet conduit of the regulating member 20 corresponding to minimum flow Q_{Min}, is in one and the same angular and axial position for natural gas NG and for liquefied gas LPG.

The regulating member 20 internally comprises an axial inner chamber 24, said inner chamber 24 being communicated with the first opening 22 traversing the wall of said regulating member 20, with the second opening 23, which is in fluid communication with the first opening 22, and with the outlet conduit 12 of the valve body 10. The second opening 23 is groove-shaped, said second opening 23 being substantially perpendicular to the longitudinal axis of the regulating member 20, and having a shape with decreasing section, such that the corresponding intermediate flow Q_{Int} decreases as rotation of the rotating shaft 7 progresses. Said second opening 23 is in communication at one end with the first opening 22, the longitudinal axis of the second opening 23 being kept substantially in the same axial position, with respect to the longitudinal axis of the regulating member 20, as the center of the first opening 22. Therefore, when the regulating member 20 is rotated and arranged in the angular position A1 corresponding to maximum flow Q_{Max}, or in the angular position A1-A2 corresponding to intermediate flow Q_{Int}, the incoming gas flow is driven from the inlet conduit 11 to the outlet conduit 12, as shown by the arrows in Figure 3a.

To be able to drive the gas flow from the inlet conduit 11 to the outlet conduit 12 when the regulating member 20 is arranged in the angular position A3 corresponding to minimum flow Q_{Min}, the valve body 10 internally comprises an inner conduit 14 communicating the inlet conduit 11 with the outlet conduit 12. When the regulating member 20 is arranged in the angular position A3, the inlet conduit 11 coincides with the slot 21, as shown in Figure 4b. The inner conduit 14 of the valve body 10 comprises at one end, a first opening 15 which is arranged on the inner surface of the housing cavity 13 of the valve body 10. Said inner conduit 14 comprises at its other end a second opening 16 which is arranged on the inner surface of the outlet conduit 12 of the valve body 10. Therefore, in the angular position A3 of the regulating member 20 corresponding to minimum flow Q_{Min}, the gas flow can be driven from the inlet conduit 11 to the outlet conduit 12, going through the slot 21 and the inner conduit 14, as shown by the arrows in Figure 3b. Therefore, rotating the regulating member 20 by means of the rotating shaft 7, allows progressively contacting the inlet conduit 11 with the first opening 22, the second opening 23 and the slot 21, which thus allows varying the gas flow supplied to the valve body 10 of the regulating valve 100.

Figures 6a, 6b, and 6c show a longitudinal section view, an elevational view, and a perspective view of a second embodiment of the injector 30 of the regulating valve 100 of Figure 1. The injector 30, having a substantially cylindrical shape, comprises in this embodiment a first end 34 forming a base and a second end 35 opposite the first end 34. Said injector 30 comprises a threaded area 40 arranged at the base of the injector 30 and close to the first end 34, a central body 36 arranged between the threaded area 40 and the second end 35, and a circular groove 50 close to the second end 35, running perimetrically around the central body 36.

The threaded area 40 of the injector 30 allows attaching said injector 30 to the outlet conduit 12 of the valve body 10, such that the gas flow cannot go through said threaded attachment. The central body 36 of the injector 30 has an outer diameter smaller than the inner diameter of the outlet conduit 12, such that an intermediate chamber 17 is formed between the outer wall of the central body 36 and the inner wall of the outlet conduit 12. A preferably elastomeric gasket 51 which allows fitting between the injector 30 and the inner wall of the outlet conduit 12, such that the gas flow cannot go through said fitting area, is arranged in the circular groove 50. Therefore, the intermediate chamber 17 arranged between the outlet conduit 12 and the central body 36 of the injector 30, between the threaded area 40 and the gasket 51, is insulated.

The injector 30 comprises an inner conduit 31 running longitudinally therethrough between the first end 34 and the second end 35. Said inner conduit 31 communicates, at the first end 34, with the outside of the regulating valve 100 through a first opening 37. The inner conduit 31 communicates with the outlet conduit 12 of the valve body 10 through a first calibrated opening 32, the outlet of the first calibrated opening 32 into the outlet conduit 12, being arranged in the intermediate chamber 17. The second opening 16 of the inner conduit 14 of the valve body 10, is arranged in the inner wall of the outlet conduit 12 corresponding to the area where the intermediate chamber 17 is located. Said first calibrated opening 32 allows defining the minimum flow Q_{Min}, the diameter of the first calibrated opening 32 of the injector 30 corresponding to natural gas NG, being greater than the diameter of the first calibrated opening 32 of the injector 30 corresponding to liquefied gas LPG.

In the second embodiment of the injector 30 shown in Figures 6a, 6b, and 6c, the first calibrated opening 32 is arranged at the base of said injector 30 close to the threaded area 40. Said first calibrated opening 32 is preferably arranged at the base of the injector 30, since said location has a higher pressure due to the gas flow, and benefits the operation of the gas regulating valve 100 when it is located in the position of minimum flow. In a first embodiment of the injector 30 shown in Figures 3a and 3b, the first calibrated opening 32 is arranged in the inner conduit 31 about halfway between the first end 34 and the second end 35 of the injector 30. The first calibrated opening 32 can be arranged anywhere in the inner conduit 31 of the injector 30 between the threaded area 40 and the second end 35 of the injector 30.

The regulating member 20 is arranged in the valve body 10 before the outlet conduit 12, according to the direction of gas flow. The valve body 10 comprises an outlet chamber 18, communicating the outlet of the inner chamber 24 of the regulating member 20 with the outlet conduit 12. The second end 35 of the injector 30 is arranged at the start of the outlet conduit 12, according to the gas flow. The gasket 51 arranged in the circular groove 50 of the injector 30 therefore fits with the inner wall of the outlet conduit 12 at the start thereof.

Hence, when the rotating shaft 7 is rotated and the regulating member 20 is arranged in angular position A1 or angular position A1-A2, therefore corresponding to the position of maximum flow Q_{Max} or to the position of intermediate flow Q_{Int}, respectively, the inlet conduit 11 of the valve body 10 coincides with the first opening 22 or the second opening 23, and the gas flows through said openings, circulates through the inner chamber 24 of the regulating member 20, and continues through the outlet chamber 18 to the outlet conduit 12, as shown by the arrows in Figure 3a. Since the gasket 51 makes the passage between the inner wall of the outlet conduit 12 and the outer wall of the central body 36 of the injector 30 tight, the gas at the outlet of the outlet chamber 18 is introduced in the inner conduit 31 of the injector 30 through a second opening 38 of the injector 30. Finally, the gas exits the regulating valve 100 through the first opening 37 of the injector 30, previously going through a second calibrated opening 33, said second calibrated opening 33 being arranged at the first end 34 of the injector 30, and before the first opening 37 of the injector 30 in the direction of gas flow. The gas can exit through the first calibrated opening 32 to the intermediate chamber 17, and from said intermediate chamber 17 through the second opening 16 of the inner conduit 14, the gas can flow to the regulating member 20 in the first opening 15 of the inner conduit 14, but it cannot go beyond this position because the slot 21 does not coincide with the first opening 15 in angular positions A1, A1-A2.

The second calibrated opening 33 allows defining the maximum flow Q_{Max}, the diameter of the second calibrated opening 33 of the injector 30 corresponding to natural gas NG being greater than the diameter of the second calibrated opening 33 of the injector 30 corresponding to liquefied gas LPG.

In this embodiment, the slot 21 of the regulating member 20 comprises a cavity 25 and a groove 26. The cavity 25 is substantially circular, such that when the regulating member 20 is arranged in the angular position A3 corresponding to minimum flow Q_{Min}, said cavity 25 coincides with the inlet conduit 11. The cavity 25 is circular, and can also be concentric circular according to how far into the wall of the regulating member 20 it goes. The groove 26 is substantially perpendicular to the longitudinal axis of the regulating member 20, and is communicated at one end to the cavity 25. Therefore, by arranging the regulating member 20 in the angular position A3 corresponding to minimum flow Q_{Min}, the cavity 25 communicates with the inlet conduit 11, and since the cavity 25 is communicated with the groove 26, the gas flows through said groove 26 which coincides at one end with the first opening 15 of the inner conduit 14, until reaching said first opening 15. This construction of the slot 21 with a cavity 25 and a groove 26 allows greater flexibility in the construction of the regulating member 20, being able to generate different configurations that allow matching up the inlet conduit 11 of the valve body 10, the cavity 25 and the groove 26 of the slot 21, and the first opening 15 of the inner conduit 14 of the valve body 10.

Therefore, when the rotating shaft 7 is rotated and the regulating member 20 is arranged in the angular position A3, therefore corresponding to the position of minimum flow Q_{Min}, the inlet conduit 11 of the valve body 10 coincides with the cavity 25 of the slot 21, and the gas flows through said cavity 25, through the groove 26, and is introduced through the first opening 15 of the inner conduit 14 of the valve body 10. The gas circulates through said inner conduit 14 to the second opening 16 of the inner conduit 14. The gas exits into the intermediate chamber 17 through said second opening 16 of the inner conduit 14. Said intermediate chamber 17 is insulated both by means of the fitting made between the injector 30 and the outlet conduit 12 with the gasket 51, and with the threaded area 40. The gas therefore continues through said intermediate chamber 17 to the first calibrated opening 32 of the injector 30, and is introduced in the inner conduit 31 of the injector 30. The gas finally exits the regulating valve 100 through the first opening 37 of the injector 30, previously going through the second calibrated opening 33 of the injector 30, as shown by the arrows in Figure 3b. The gas can exit through the second opening 38 of the injector 30 to the outlet chamber 18 of the valve body 10, and from said outlet chamber 18 through the intermediate chamber 24 of the regulating member 20, the gas can flow to the first opening 22 and the second opening 23 of said regulating member 20, but it cannot go beyond this position because the first opening 22 and the second opening 23 do not coincide with the inlet conduit 11 in angular position A3.

The injector 30 corresponding to natural gas NG has a second calibrated opening 33, defining the maximum flow Q_{Max}, with a diameter greater than the diameter of the first calibrated opening 32 of the injector 30, and the injector 30 corresponding to liquefied gas LPG has a second calibrated opening 33 with a diameter greater than the diameter of the first calibrated opening 32 of the injector 30. Therefore, when the regulating member 20 is arranged in the angular position A3, therefore corresponding to the position of minimum flow Q_{Min}, the gas flow is defined by the first calibrated opening 32, and when this gas flow subsequently goes through the second calibrated opening 33, since the diameter of the second calibrated opening 33 is greater than the diameter of the first calibrated opening 32 of the injector 30, said gas flow is not limited by the second calibrated opening 33.

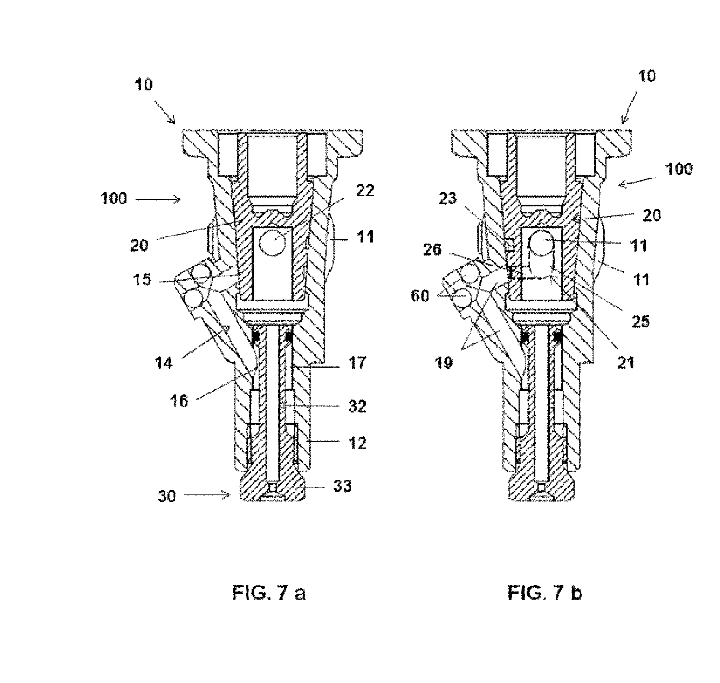

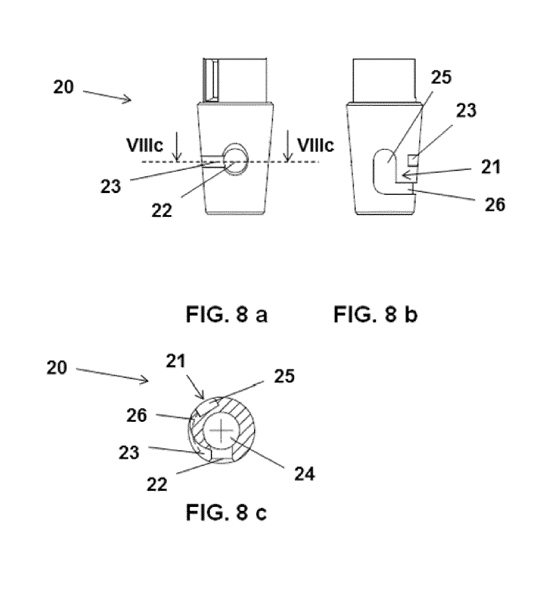

Figure 7a shows a longitudinal section view of a second embodiment of the regulating valve 100, the regulating member 20 being regulated in the angular position A1 corresponding to maximum flow Q_{Max}. Figure 7b shows a longitudinal section view of the regulating valve 100 of Figure 7a, the regulating member 20 being regulated in the angular position A3 corresponding to minimum flow Q_{Min}. The regulating member 20 of said second embodiment of the regulating valve 100 is shown in Figure 8a with an elevational view of the regulating member 20, showing the first opening 22 corresponding to maximum flow Q_{Max}, and the second groove-shaped opening 23 corresponding to intermediate flow Q_{Int}. The regulating member 20 is also shown in Figure 8b, with an elevational view of the regulating member 20, showing the slot 21 corresponding to minimum flow Q_{Min}, and in Figure 8c, showing a section view of the regulating member 20 according to line VIIIc-VIIIc. In this second embodiment of the regulating valve 100, the longitudinal axis of the groove 26 of the slot 21 of the regulating member 20, is arranged axially below the position of the longitudinal axis of the second opening 23.

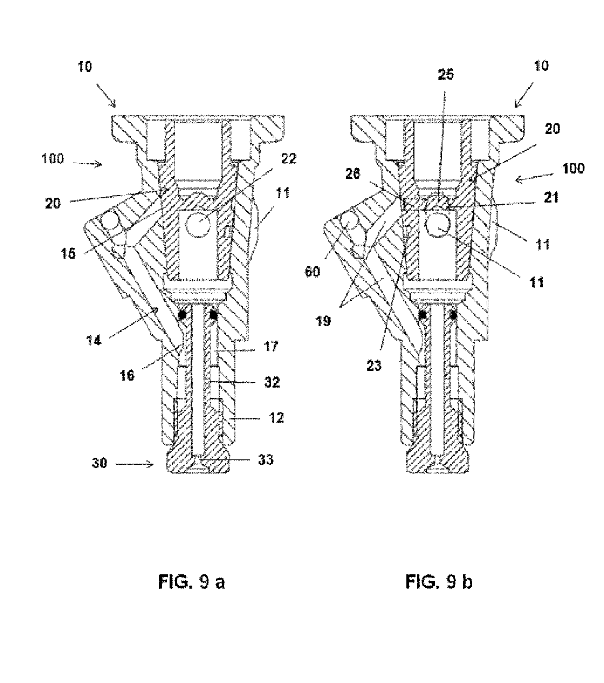

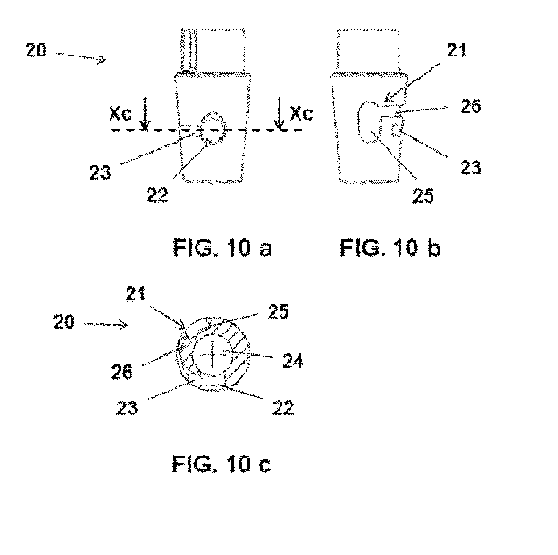

Figure 9a shows a longitudinal section view of a third embodiment of the regulating valve 100, the regulating member 20 being regulated in angular position A1 corresponding to maximum flow Q_{Max}. Figure 9b shows a longitudinal section view of the regulating valve 100 of Figure 9a, the regulating member 20 being regulated in angular position A3 corresponding to minimum flow Q_{Min}. The regulating member 20 of said third embodiment of the regulating valve 100 is shown in Figure 10a with an elevational view of the regulating member 20, showing the first opening 22 corresponding to maximum flow Q_{Max} and the second groove-shaped opening 23 corresponding to intermediate flow Q_{Int}. The regulating member 20 is also shown in Figure 10b with an elevational view of the regulating member 20, showing the slot 21 corresponding to minimum flow Q_{Min}, and in Figure 10c showing a section view of the regulating member 20 according to line Xc-Xc. In this third embodiment of the regulating valve 100, the longitudinal axis of the groove 26 of the slot 21 of the regulating member 20 is arranged axially above the position of the longitudinal axis of the second opening 23.

In the three embodiments shown, the valve body 10 of the regulating valve 100 is made of a metal material. The material must therefore be machined to make the inner conduit 14 of the valve body 10, opening said inner conduit 14 with the suitable drill. Said drill is chosen depending on the diameter of the inner conduit 14, the depth of the conduits defined in the valve body 10 for forming said inner conduit 14, and the material used for making said valve body 10.

The inner conduit 14 of the valve body 10 is formed by at least two conduits 19, at least one of the conduits 19 opening from outside the valve body 10, and the at least one other conduit 19 opening from inside the valve body 10. Once the conduits 19 are open, access to the open conduits 19 from outside the valve body 10 must be closed by means of metal, preferably steel, balls 60.

Therefore, in the first embodiment of the regulating valve 100 shown in Figures 3a and 3b, the inner conduit 14 of the valve body 10 is formed by three conduits 19, the three conduits 19 being open from outside the valve body 10, and said conduits 19 being closed from outside with one ball 60 each.

In the second embodiment of the regulating valve 100 shown in Figures 7a and 7b, the inner conduit 14 of the valve body 10 is formed by two conduits 19, the two conduits 19 being open from outside the valve body 10, and said conduits 19 being closed from outside with one ball 60 each.

In the third embodiment of the regulating valve 100 shown in Figures 9a and 9b, the inner conduit 14 of the valve body 10 is formed by two conduits 19, one of the conduits 19 being open from outside the valve body 10, and the other conduit 19 being open from inside the valve body 10. The conduit 19 open from outside the valve body 10 is closed by means of a ball 60, and the other conduit 19, open from inside the valve body 10, is not closed as it coincides with a first section of the inner conduit 14 between the first opening 15 of said inner conduit 14, and the connection with the conduit 19 open from outside the valve body 10. This conduit 19 open from outside the valve body 10 coincides with a second section of the inner conduit 14, between the connection with the first section of the inner conduit 14 and the second opening 16 of said inner conduit 14.

## Claims

1. Regulating valve for a gas cooking appliance suitable for supplying different types of combustible gas, particularly natural gas (NG) or liquefied gas (LPG), comprising a valve body (10) with an inlet conduit (11) and an outlet conduit (12), and a rotary regulating member (20) housed in said valve body (10), said regulating member (20) comprising a plurality of inlet paths communicated with the inlet conduit (11) which allows varying gas flow "Q" in the outlet conduit (12) by means of the rotation of said regulating member (20), **characterized in that** the inlet path of the regulating member (20) corresponding to a minimum flow "Q_{Min}" is in one and the same angular and axial position for natural gas (NG) and for liquefied gas (LPG).

2. Regulating valve according to claim 1, wherein the valve body (10) comprises an inner conduit (14) communicating the inlet conduit (11) with the outlet conduit (12), when the regulating member (20) is arranged in the angular position of minimum flow "Q_{Min}".

3. Regulating valve according to claim 2, wherein the regulating member (20) is housed in a housing cavity (13) of the valve body (10), the inlet paths of said regulating member (20) comprising a slot (21) arranged on the outer surface of the regulating member (20), the rotation of the regulating member (20) to the angular position of minimum flow "Q_{Min}" allowing communicating the inlet conduit (11) with the slot (21), and the slot (21) with the conduit (14) in a first opening (15) of said inner conduit (14) arranged in the housing cavity (13).

4. Regulating valve according to claim 3, comprising a removable injector (30) arranged in the outlet conduit (12), which is different for each type of natural gas (NG) or of liquefied gas (LPG), said injector (30) comprising an inner conduit (31) running longitudinally therethrough, said inner conduit (31) communicating, at a first end (34) of the injector (30), with the outside of the regulating valve (100) through a first opening (37), and a first calibrated opening (32) defining the minimum flow "Q_{Min}", the diameter of the first calibrated opening (32) of the injector (30) of natural gas (NG) being greater than the diameter of the first calibrated opening (32) of the injector (30) of liquefied gas (LPG), said first calibrated opening (32) communicating with the outlet conduit (12) and with the inner conduit (31) of the injector(30).

5. Regulating valve according to claim 4, wherein the injector (30) comprises a threaded area (40) close to the first end (34) which allows attaching to the substantially cylindrical outlet conduit (12) of the valve body (10), a substantially cylindrical central body (36) comprised between the threaded area (40) and a second end (35) of the injector (30), the central body (36) having an outer diameter smaller than the inner diameter of the outlet conduit (12), the central body (36) of the injector (30) comprising a circular groove (50) running perimetrically around said central body (36), and wherein a gasket (51) which allows fitting between the injector (30) and the outlet conduit (12) is arranged, an insulated intermediate chamber (17) being formed between the outlet conduit (12) and the central body (36) of the injector (30).

6. Regulating valve according to claim 5, wherein the inner conduit (14) of the valve body (10) communicates with the outlet conduit (12) in a second opening (16) of said inner conduit (14), said second opening (16) being arranged in the outlet conduit (12) in the intermediate chamber (17), and the first calibrated opening (32) being arranged in the central body (36), preferably close to the threaded area 40, said first calibrated opening (32) communicating the intermediate chamber (17) with the inner conduit (31) of the injector (30).

7. Regulating valve according to any of claims 4 to 6, wherein the regulating member (20) comprises an axial inner chamber (24) communicating with the inlet openings and with the outlet conduit (12) of the valve body (10), said valve body (10) comprising an outlet chamber (18), communicating the outlet of the inner chamber (24) of the regulating member (20) with the inner conduit (31) of the injector (30) at the second end (35), in a second opening (38).

8. Regulating valve according to claim 7, wherein the inlet paths of the regulating member (20) comprise a first opening (22) corresponding to a maximum flow "Q_{Max}", and a second opening (23) corresponding to a decreasing intermediate flow "Q_{Int}", the first opening (22), the second opening (23), and the slot (21) corresponding with different angular positions (A1, A1-A2, A3) of the regulating member (20) from an initial position (OFF), the angular position corresponding to natural gas (NG) and to liquefied gas (LPG) being the same.

9. Regulating valve according to claim 8, wherein the injector (30) comprises a second calibrated opening (33) corresponding to maximum flow "Q_{Max}", the diameter of the second calibrated opening (33) of natural gas (NG) being greater than the diameter of the second calibrated opening (33) of liquefied gas (LPG), said second calibrated opening (33) being arranged at the first end (34) of the injector (30), and before the opening (37) of said injector (30) in the direction of gas flow.

10. Regulating valve according to one of claims 8 or 9, wherein the second opening (23) is groove-shaped, said second opening (23) being substantially perpendicular to the longitudinal axis of the regulating member (20), said second opening (23) being communicated at one end to the first opening (22), and with a decreasing width as its angular position moves away from the first opening (22), the longitudinal axis of the second opening (23) being kept substantially in the same axial position of the regulating member (20) as the center of the first opening (22).

11. Regulating valve according to any of claims 3 to 10, wherein the slot (21) comprises a cavity (25), and a groove (26), substantially perpendicular to the longitudinal axis of the regulating member (20) which is communicated at one end to the cavity (25), the rotation of the regulating member (20) to the angular position of minimum flow "Q_{Min}", allowing communicating the cavity (25) with the inlet conduit (11), and communicating the groove (26) with the first opening (15) of the inner conduit (14) of the valve body (10).

12. Regulating valve according to claim 11, wherein the longitudinal axis of the groove (26) of the slot (21) is arranged axially in the regulating member (20), below the position of the longitudinal axis of the second opening (23).

13. Regulating valve according to claim 11, wherein the longitudinal axis of the groove (26) of the slot (21) is arranged axially in the regulating member (20), above the position of the longitudinal axis of the second opening (23).

14. Regulating valve according to claim 11, wherein the valve body (10) is made of a metal material, the inner conduit (14) being made by means of machining, said inner conduit (14) being formed by at least two conduits (19), at least one of the conduits (19) being open from outside the valve body (10), the aperture of the open conduits (19) that are open from the outside being closed by means of metal balls (60).
